# EUROPEAN PATENT SPECIFICATION

(11) **EP 1 364 734 B1**
(45) Date of publication and mention of the grant of the patent: **02.02.2005**
(21) Application number: 03010987.0
(22) Date of filing: 16.05.2003
(51) Int. Cl.: B23C 5/26, B27B 5/32, B27B 5/36

(54) **Tool-bearing device**
Vorrichtung mit werkzeugtragenden Armen.
Dispositif comportant des bras porte-outils

(30) Priority: 23.05.2002 IT UD20020112
(43) Date of publication of application: 26.11.2003
(73) Proprietor: Metal World SpA, 33050 Pavia Di Udine (UD) (IT)
(72) Inventor: Caisutti, Andrea, 33050 Pavia Di Udine (UD) (IT)
(74) Representative: Petraz, Gilberto

(56) References cited:
- EP-A- 0 592 694
- DE-A- 3 038 674
- US-A- 4 801 227

## Description

### FIELD OF THE INVENTION

The present invention concerns a tool-bearing device suitable to couple a tool of a circular type to the shaft of a motor able to make it rotate, according to the preamble of claim 1, as for example known from EP-A-592694.

The tool-bearing device according to the invention is applied particularly, but not exclusively, to tools used in working wood or plastic materials, such as for example circular toothed milling cutters or similar.

### BACKGROUND OF THE INVENTION

Tools of a circular type normally consist of a disk which has working elements, such as teeth, notches or similar on the periphery, and an axial hole to insert therein an element to support the disk and couple it to the shaft of the motor that makes it rotate.

In tools of this type, in order to obtain a correct functioning, it is extremely important to ensure that the position of the work plane is exactly orthogonal with respect to its axis of rotation, and remains so even after continuous use. In fact, if the tool works on a plane not orthogonal to the axis of rotation, the wear will be different at different zones; consequently, the duration of the tool in correct conditions of use is considerably reduced, requiring much more frequent interventions of restoration or replacement. Moreover, the action of the tool on the piece to be worked is less effective and uniform.

To avoid this shortcoming, it is known to provide tool-bearing devices suitable to perform adjustment operations, in order to ensure a correct and constant positioning on a plane orthogonal to the axis of rotation. Known embodiments provide to use a plurality of adjustment screws arranged parallel to the axis of rotation of the tool, but these solutions have not proved to be effective insomuch as they do not guarantee fine adjustments and are subject over time to loosening and lack of hold. It must be considered that such tools are subject to even very intense stresses considering the very high speeds of rotation that they assume during use, up to more than 6000 rpm.

Applicant has embodied and patented a solution that uses a plurality of wedge-shaped means, distributed uniformly on the circumference of the tool-bearing device and able to act radially in a direction slightly inclined with respect to the axis of rotation, to perform even micrometric adjustment operations on the work plane of the tool. This solution, although very valid, has the disadvantage that, for every adjustment, first the screws that attach the tool-bearing flange to the tool have to be loosened, then the wedge-shaped elements have to be adjusted and then the attachment screws have to be tightened again.

These operations not only require a long time due to the conditions in which the workers have to operate, but also they are sometimes complex and difficult to perform directly in the machine due to the presence of guards or other protection elements which have to be removed in order to access the clamping elements.

Applicant has devised and embodied the present invention to overcome these shortcomings of the state of the art, and to obtain other advantages.

### SUMMARY OF THE INVENTION

The present invention is set forth and characterized essentially in the main claim, while the dependent claims describe other innovative characteristics of the invention.

The purpose of the present invention is to achieve a tool-bearing device which allows to make easy and rapid adjustment operations to adjust the work plane of the tool in order to ensure that it is kept orthogonal to the axis of rotation. Another purpose is to allow to make said adjustment operations also after the tool-bearing device has been assembled onto the machine that uses it.

In accordance with these purposes, a tool-bearing device according to the invention comprises a flange-type main body axially holed and able to couple with the rotation shaft of the machine on which the tool has to be mounted.

The circular tool, for example a toothed milling cutter or other similar or comparable tool, is keyed and clamped, normally by means of screws, onto this main body.

In a preferential embodiment, between the main body and the tool there is an annular supporting element, attached to the main body by means of clamping screws and to which, in turn, the tool is attached by means of clamping screws.

The tool-bearing device also comprises a plurality of wedge-shaped adjustment means, distributed on the circumference of the main body. The wedge-shaped means are able to be displaced radially in order to act on a mating inclined surface of a relative recess made on the main body, in a direction slightly inclined with respect to the orthogonal to the axis of rotation. The wedge-shaped means are associated with adjustment means accessible from the outside and allow to perform operations to adjust and fine balance the position of the work plane of the tool with respect to its axis of rotation.

To be more exact, acting on the adjustment means of at least one of the wedge-shaped means acts on a corresponding portion of the surface of the annular supporting element, thereby modifying, even micrometrically, the supporting plane and consequently the work plane of the tool with respect to the axis of rotation.

According to a characteristic of the invention, the means that clamp the main body of the tool-bearing device to the relative annular supporting element are axially associated with elastic means able to be selectively compressed, or to expand, when an adjustment is made to the work plane of the tool by acting on one and/or the other of the wedge-shaped means.

Thanks to the presence of the elastic means, in order to perform the desired adjustments it is therefore not necessary to remove the means, for example screws, which clamp the main body to the annular supporting element, since the coupling of the two elements is no longer rigid but can be elastically adjusted. Moreover, the elastic means ensure that there is a constant connection force between the elements of the tool-bearing device, which prevents the formation of plays that can cause vibrations or loosening.

In a preferential embodiment, the elastic means consist of cup-type springs. In another preferential embodiment, between the cup-type springs and the relative clamping means there is a cylindrical bushing that prevents direct contact between the components. In another preferential embodiment, there are three wedge-shaped adjustment means, distributed at 120° on the circumference of the main body.

According to a variant, on the opposite side with respect to the position of the tool, a covering circular flange is associated with the main body. The flange has at least a groove to house balancing elements, such as small masses or suchlike, the angular position of which can be modified to ensure the constant balancing of the whole tool-bearing device.

### BRIEF DESCRIPTION OF THE DRAWINGS

These and other characteristics of the present invention will become apparent from the following description of a preferential form of embodiment, given as a non-restrictive example, with reference to the attached drawings wherein:
- fig. 1 is a plane view of the main body of the tool-bearing device according to the invention;
- fig. 2 is a section from A to A of fig. 1;
- fig. 3 is a plane view of the annular supporting element of the tool-bearing device according to the invention;
- fig. 4 is a section from B to B of fig. 3;
- fig. 5 is a plane view of the covering flange of the tool-bearing device according to the invention;
- fig. 6 is a section from C to C of fig. 5;
- fig. 7 shows an overall section, on an enlarged scale, of the tool-bearing device according to the invention
wherein there is also a tool.

### DETAILED DESCRIPTION OF A PREFERENTIAL FORM OF EMBODIMENT OF THE INVENTION

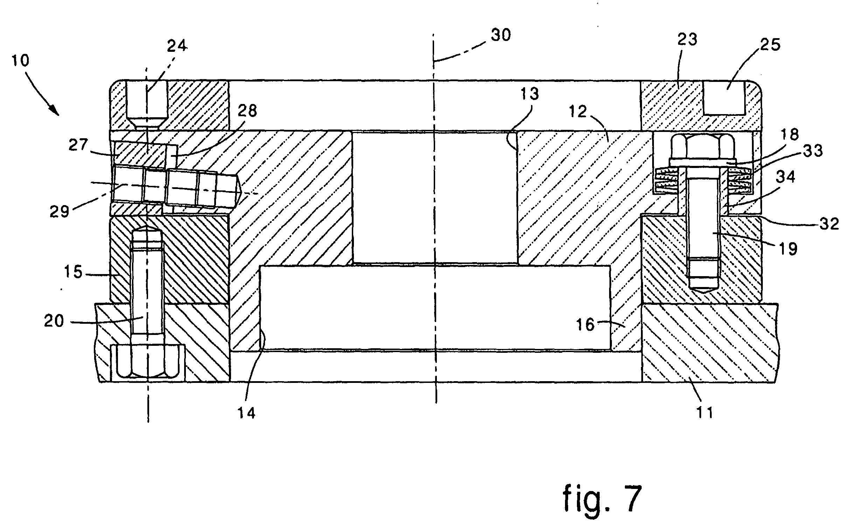

With reference to the attached figures, and particularly fig. 7, a tool-bearing device is denoted in its entirety by the reference number 10 and is used to support a circular tool 11, such as a toothed milling cutter or similar, and make it rotate according to an axis 30.

The tool-bearing device 10 comprises a main body 12 with an axial hole 13 to insert and clamp, in this case with a key, a drive shaft (not shown), and a cylindrical shoulder 16 onto which the tool 11 is keyed and clamped. In the embodiment shown here, on the side of the tool 11 the main body comprises another axial hole 14 in which is housed a possible attachment element to attach the device 10 to the drive shaft, such as a nut, a screw or suchlike.

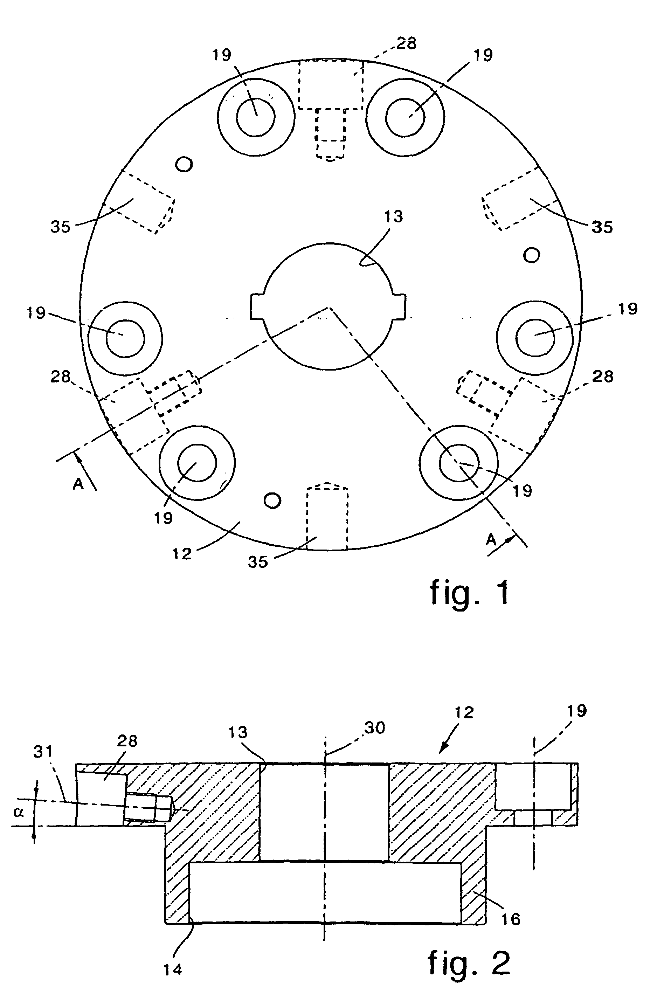

Between the main body 12 and the tool 11 there is an annular supporting element 15, attached to the body 12 by means of a plurality of attachment screws 19, in this case six, with relative washers 18. In figs. 1-4 the threaded holes to house the screws 19 are shown with the relative axes.

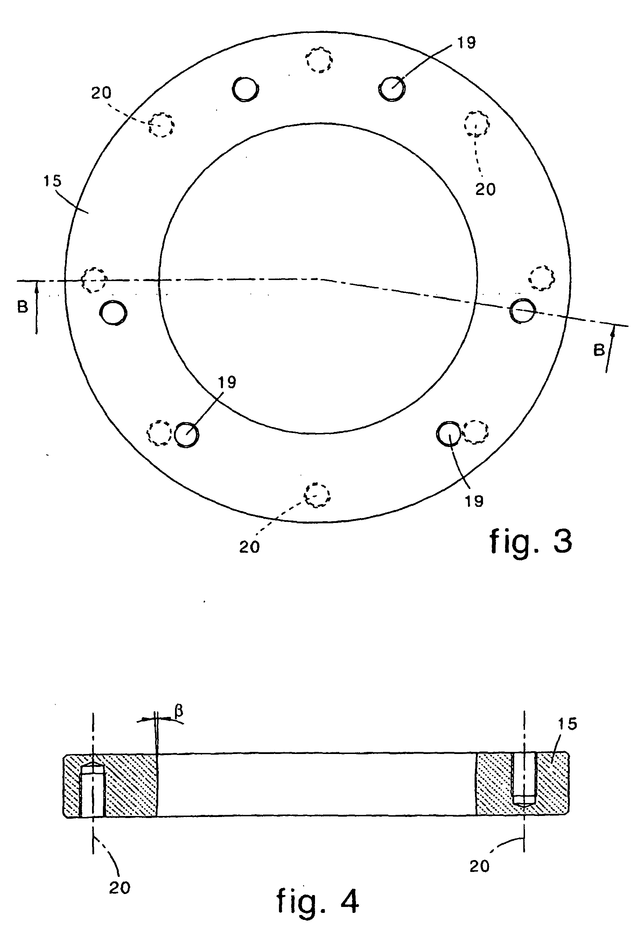

The tool 11 is clamped to the annular supporting element 15 by means of attachment screws 20. In figs. 3 and 4 the threaded holes to house the screws 20 are represented by the relative axes.

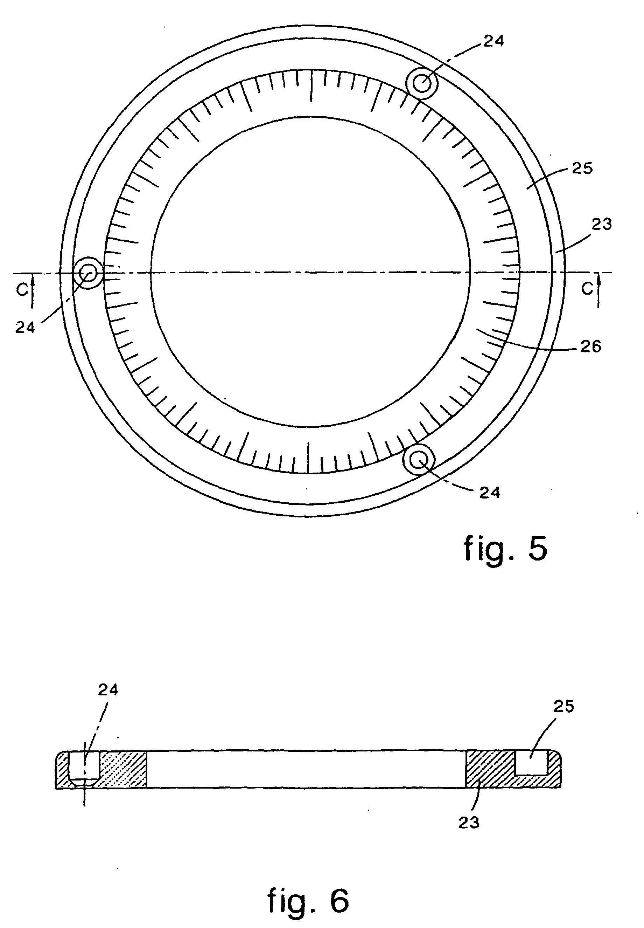

On the opposite side with respect to the tool 11, there is a circular covering flange 23 attached to the main body 12 by means of screws. In figs. 1, 5 and 6 the number 24 indicates the axis of the holes that house such screws. The covering flange 23 not only protects the holes in the body 12, into which the screws 19 are inserted, from the infiltration of dust, oil or other dirt, but also has the function of housing a plurality of masses that can be displaced angularly in order to balance the weight of the entire tool assembly. To be more exact, on the outer surface of the flange 23 there is a groove 25, concentric with the axis of the flange 23 and able to house small masses that can be displaced and clamped in a defined angular position.

To facilitate the balancing operations, in a position adjacent to the groove 25 there is a graduated scale 26 which allows the operator to angularly position the individual masses precisely until the desired balance is obtained.

The tool-bearing device 10 has adjustment means to adjust the position of the work plane of the tool 11, consisting of conical blocks 27 inserted into mating recesses 28 made on the outer periphery of the main body 12.

The conical blocks 27 are associated with adjustment screws 29 whose work axis 31 (fig. 2) is slightly inclined, by an angle α, with respect to the orthogonal to the axis of rotation 30 of the tool 11. The angle α can vary, according to the invention, from 2 to 10°, preferably from 3 to 7°.

At least one wall of every recess 28 is inclined with respect to the orthogonal to the axis of rotation 30 by an angle which is advantageously equal to said angle α, although it is not excluded that the angle can assume a different value, while an opposite wall is orthogonal to said axis 30.

In this case (figs. 1 and 7), the device 10 has three conical blocks 27 inserted into relative recesses 28, distributed at 120° on the circumference of the main body. It comes within the field of the invention that there can be four or more adjustment assemblies comprising the conical blocks 27, advantageously distributed uniformly on the circumference.

By acting radially on the adjustment screws 29, the conical block 27 is inserted more or less deeply inside the relative recess 28, and thus, due to the presence of the inclined wall, forces the adjacent zone of the annular supporting element 15 and consequently modifies the work plane of the tool 11. To allow this displacement, between the inner wall (with respect to the tool 11) of the annular supporting element 15 and the mating outer wall of the main body 12 there is a gap 32 of several tenths of a millimetre, advantageously between 3 and 8.

Moreover, the inner hole of the annular supporting element 15 (fig. 4) has a wall bevelled at the ends by an angle β of between 1 and 8°, advantageously between 2 and 5^{°}, which, together with the gap 32, allows a certain adjustment play, even micrometric, of the work plane of the tool 11 by acting on one and/or the other of the screws 29.

According to the main characteristic of the present invention, the screws 19 that attach the main body 12 to the annular supporting element 15 are associated to elastic means, in this case cup-type springs 33, which can be compressed, or expand, according to a pressure force, or to a release, which is generated between the surfaces of reciprocal support of the annular supporting element 15 and the main body 12 during the adjustment steps to adjust the work plane of the tool 11.

In other words, every time we act in a radial direction on the adjustment screws 29 to modify the position of the work plane of the tool 11 with respect to the axis of rotation 30, the elastic connection, not rigid, between the main body 12 and the supporting element 15 allows to adapt the tool to the new position without needing to act and operate on the attachment screws 19.

This allows to perform all the regulation and adjustment operations directly in the machine, keeping both the main body 12 and also the covering flange 23 in place, without removing any other possible protection element. The presence of the elastic elements 33, exerting an elastic force in the direction of the join between the annular supporting element 15 and the main body 12, guarantees that plays are cancelled and prevents any loosening from occurring both during and after the tool 11 is used.

In this case, the cup-type springs 33 are arranged between the relative washer 18 and the inner surface of the hole that houses the clamping screws 19.

The cup-type springs 33 used in the embodiment shown here can be replaced by any other elastic element suitable for the purpose, for example laminated springs, leaf springs, helical springs, or other similar springs. Between the cup-type springs 33 and the shaft of the relative screw 19 there is a cylindrical bushing 34 which prevents direct contact and facilitates the functioning of the adjustment mechanism.

In the embodiment shown here, the main body has on its periphery three more recesses 35 that allow the operations to attach/release the main body 12 to/from the drive shaft.

It is clear, however, that modifications and/or additions of parts can be made to the tool-bearing device 10 as described heretofore, without departing from the field and scope of the present invention, as defined by the claims.

## Claims

1. Tool bearing device able to couple a tool (11) to the shatt of a motor, comprising a main body (12) to support said tool (11) and a plurality of clamping elements (19) that attach said tool (11) to said main body (12), wedge-shaped means (27) also being present able to be displaced radially to act on a mating inclined surface of a relative recess (28) made on said main body (12), **characterized in that** said clamping means (19) are axially associated with elastic means (33) able to be selectively compressed, or to expand, when the work plane of said tool (11) is adjusted by means of acting on one and/or the other of said wedge-shaped means (27).

2. Device as in claim 1, **characterized in that** said elastic means consist of cup-type springs (33).

3. Device as in claim 2, **characterized in that** between said cup-type springs (33) and the relative attachment means (19) there is a separation means comprising a cylindrical bushing (34).

4. Device as in claim 1, **characterized in that** said wedge-shaped means (27) are associated with adjustment screws (29) whose work axis (31) is slightly inclined by an angle (α) with respect to the orthogonal to the axis of rotation (30) of said tool (11).

5. Device as in claim 4, **characterized in that** said angle (α) varies from 2 to 10°, preferably from 3 to 7°.

6. Device as in any claim hereinbefore, **characterized in that** it comprises an annular supporting element (15) located between said main body (12) and said tool (11), between one wall of said annular supporting element (15) and a mating wall of said main body (12) there being a gap (32) of some tenths of a millimetre.

7. Device as in claim 6, **characterized in that** said gap (32) has a value of between 3 and 8 tenths of a millimetre.

8. Device as in claim 7, **characterized in that** said annular supporting element (15) has an inner hole having a wall bevelled at the ends by an angle (β).

9. Device as in claim 8, **characterized in that** said angle (β) is between 1 and 8°, preferably between 2 and 5°.

10. Device as in any claim hereinbefore, **characterized in that** there are three of said wedge-shaped means (27) and are distributed at 120° on the circumference of the main body.

11. Device as in any claim hereinbefore, **characterized in that** it has a circular covering flange (23) associated with said main body (12) on the opposite side with respect to the tool, able to house a plurality of masses able to be displaced angularly in order to balance the weight of the whole tool bearing device (10).

12. Device as in claim 11, **characterized in that**, on its outer surface, said flange (23) has at least a groove (25) able to house small masses able to be displaced and clamped in a defined angular position.

13. Device as in claim 12, **characterized in that** in a position adjacent to said groove (25) there is a graduated scale (26) able to allow a precise angular positioning of said small masses.

## Patentansprüche

1. Vorrichtung mit werkzeugtragenden Armen, welche dazu vorgesehen ist, ein Werkzeug (11) an die Welle eines Motors zu kuppeln, bestehend aus einem werkzeugtragenden Hauptgehäuse (12) und einer Vielzahl von Spannelementen (19) zum Anschließen des Werkzeugs (11) an das Hauptgehäuse (12), keilförmige Mittel (27) zum radialen Verschieben sind ebenfalls vorhanden, um auf einer zugehörigen geneigten Oberfläche einer auf dem Hauptgehäuse befindlichen relativen Aussparung (28) einwirkt, **dadurch gekennzeichnet, dass** die Spannmittel (19) axial zugeordnet zu dem elastischen Mittel (33) sind, in der Lage wahlweise zusammenpressbar oder dehnbar zu sein, wenn die Arbeitsfläche des Werkzeugs (11) durch Mittel einstellbar ist, welche auf das eine und/oder das andere keilförmigen Mittel (27) wirken.

2. Vorrichtung nach Anspruch 1, **dadurch gekennzeichnet, dass** die elastischen Mittel aus einer becherförmigen Feder (33) bestehen.

3. Vorrichtung nach Anspruch 2, **dadurch gekennzeichnet, dass** zwischen den becherförmigen Federn (33) und dem relativen Adaptermittel (19) ein Trennmittel, welches eine zylindrische Hülse aufweist (34), bestehen.

4. Vorrichtung nach Anspruch 1, **dadurch gekennzeichnet, dass** die keilförmigen Mittel (27) zu Stellschrauben (29) zugeordnet sind, deren Arbeitsachse (31) leicht in einen Winkel Alpha (α) in Bezug auf die Senkrechte zur Rotationsachse (30) des Werkzeug (11) geneigt ist.

5. Vorrichtung nach Anspruch 4, **dadurch gekennzeichnet, dass** der Winkel Alpha (α) im Bereich von 2 bis 10 Grad, vorzugsweise im Bereich von 3 bis 7 Grad liegt.

6. Vorrichtung nach einem der vorangegangen Ansprüche, **dadurch gekennzeichnet, dass** es ein ringförmiges Trägerelement (15) umfasst, welches zwischen dem Hauptgehäuse (12) und dem Werkzeug (11) lokalisiert ist, zwischen einer Wand des ringförmigen Trägerelements (15) und einer Wand des Hauptgehäuses (12) befindet sich eine Lücke (32) von einigen zehntel Millimetern.

7. Vorrichtung nach Anspruch 6, **dadurch gekennzeichnet, dass** die Lücke (32) eine Breite im Bereich von 0,3 bis 0,8 Millimetern aufweist.

8. Vorrichtung nach Anspruch 7, **dadurch gekennzeichnet, dass** in dem ringförmigen Trägerelement (15) eine innere Bohrung vorhanden ist, welche am Ende eine abgefasste Wand in einem Winkel Beta (β) aufweist.

9. Vorrichtung nach Anspruch 8, **dadurch gekennzeichnet, dass** der Winkel Beta (β) im Bereich zwischen 1 bis 8 Grad, vorzugsweise zwischen 2 bis 5 Grad liegt.

10. Vorrichtung nach einem der vorangegangen Ansprüche, **dadurch gekennzeichnet, dass** es drei keilförmige Mittel (27) gibt, und diese in einem Winkel von 120 Grad auf dem Umfang des Hauptgehäuses verteilt sind.

11. Vorrichtung nach einem der vorangegangen Ansprüche, **dadurch gekennzeichnet, dass** sie einen kreisförmigen Abdeckungsflansch (23) aufweist, welche an dem Hauptgehäuse (12) an gegenüberliegenden Seiten in Bezug auf das Werkzeug angeordnet ist, welcher in der Lage ist eine Vielzahl von Gewichten aufzunehmen, welche winklig verschoben werden können zum Ausbalancieren der Vorrichtung mit werkzeugtragenden Armen (10).

12. Vorrichtung nach Anspruch 11, **dadurch gekennzeichnet, dass** an seiner äußeren Oberfläche der Flansch (20) mindestens eine Vertiefung (25) zum Aufnehmen kleiner Gewichte, welche entfernt und in einer definierten winkeligen Position festgespannt werden können, aufweist.

13. Vorrichtung nach Anspruch 12, **dadurch gekennzeichnet, dass** in einer angrenzenden Position zur Vertiefung (25) zum Ermöglichen der präzisen Einstellung der winkligen Position der kleinen Gewichte sich eine eingeteilte Skala (26) befindet.

## Revendications

1. Dispositif porte-outils pouvant coupler un outil (11) à l'axe d'un moteur, comprenant un corps principal (12) destiné à supporter ledit outil (11) et une pluralité d'éléments de serrage (19) qui fixent ledit outil (11) audit corps principal (12), des moyens en forme de coin (27), également présents, pouvant se déplacer radialement pour agir sur la surface d'appui inclinée d'un évidement correspondant (28) pratiqué sur ledit corps principal (12), dispositif **caractérisé en ce que** lesdits moyens de serrage (19) sont associés dans le même axe à des moyens élastiques (33) pouvant être comprimés, ou se détendre, de manière sélective lorsque l'on règle le plan de travail dudit outil (11) en agissant sur l'un et/ou l'autre desdits moyens en forme de coin (27).

2. Dispositif selon la revendication 1, **caractérisé en ce que** lesdits moyens élastiques sont constitués de ressorts à coupelle (33).

3. Dispositif selon la revendication 2, **caractérisé en ce qu'**il existe, entre lesdits ressorts à coupelle (33) et les moyens de fixation correspondants (19), un moyen séparateur constitué d'un fourreau cylindrique (34).

4. Dispositif selon la revendication 1, **caractérisé en ce que** lesdits moyens en forme de coin (27) sont associés à des vis de réglage (29) dont l'axe de travail (31) est légèrement incliné d'un angle (α) par rapport à la perpendiculaire à l'axe de rotation (30) dudit outil (11).

5. Dispositif selon la revendication 4, **caractérisé en ce que** ledit angle (α) varie de 2 à 10°, de préférence de 3 à 7°.

6. Dispositif selon l'une quelconque des revendications précédentes, **caractérisé en ce qu'**il comprend un élément annulaire de support (15) placé entre ledit corps principal (12) et ledit outil (11), un intervalle (32) de quelques dixièmes de millimètre existant entre une paroi dudit élément annulaire de support (15) et la paroi d'appui dudit corps principal (12).

7. Dispositif selon la revendication 6, **caractérisé en ce que** ledit intervalle (32) a une valeur comprise entre 3 et 8 dixièmes de millimètre.

8. Dispositif selon la revendication 7, **caractérisé en ce que** ledit élément annulaire de support (15) comporte un trou interne présentant une paroi chanfreinée à ses extrémités d'un angle (b).

9. Dispositif selon la revendication 8, **caractérisé en ce que** ledit angle (β) est compris entre 1 et 8°, de préférence entre 2 et 5°.

10. Dispositif selon l'une quelconque des revendications précédentes, **caractérisé en ce que** lesdits moyens en forme de coin (27) sont au nombre de trois et sont répartis à 120° sur la circonférence du corps principal.

11. Dispositif selon l'une quelconque des revendications précédentes, **caractérisé en ce qu'**il comporte une couronne de recouvrement (23) associée audit corps principal (12), du côté opposé à l'outil, apte à contenir une pluralité de masses pouvant être déplacées de manière angulaire afin d'équilibrer le poids de l'ensemble du dispositif porte-outils (10).

12. Dispositif selon la revendication 11, **caractérisé en ce que**, sur sa surface externe, ladite couronne (23) comporte au moins une rainure (25) apte à contenir de petites masses pouvant être déplacées et serrées selon une position angulaire déterminée.

13. Dispositif selon la revendication 12, **caractérisé en ce qu'**il existe, en un emplacement adjacent à ladite rainure (25), une échelle graduée (26) apte à permettre un positionnement angulaire précis desdites petites masses.
